# EUROPEAN PATENT SPECIFICATION

(11) **EP 4 123 140 B1**
(45) Date of publication and mention of the grant of the patent: **27.03.2024**
(21) Application number: 21926040.3
(22) Date of filing: 13.05.2021
(51) Int. Cl.: F02B 39/00, F02B 39/16, F02B 77/04, B24C 3/32, B24C 7/00, B24C 11/00, F01D 5/00, F01D 25/00

(54) **EXHAUST TURBINE, SUPERCHARGER, AND METHOD FOR CLEANING EXHAUST TURBINE**
ABGASTURBINE, TURBOLADER UND VERFAHREN ZUR REINIGUNG EINER ABGASTURBINE
TURBINE D'ÉCHAPPEMENT, COMPRESSEUR À SURALIMENTATION ET PROCÉDÉ DE NETTOYAGE D'UNE TURBINE D'ÉCHAPPEMENT

(43) Date of publication of application: 25.01.2023
(73) Proprietor: Mitsubishi Heavy Industries Marine Machinery & Equipment Co., Ltd., Nagasaki-shi Nagasaki 8508610 (JP)
(72) Inventor: OBASE, Yasuhiro, Nagasaki-shi, Nagasaki 850-8610 (JP); WADA, Yasuhiro, Nagasaki-shi, Nagasaki 850-8610 (JP); NISHIMURA, Hidetaka, Nagasaki-shi, Nagasaki 850-8610 (JP); YANO, Yusuke, Nagasaki-shi, Nagasaki 850-8610 (JP); HIRATANI, Fumito, Tokyo 100-8332 (JP)
(74) Representative: Hoffmann Eitle
(86) International application number: PCT/JP2021/018203
(87) International publication number: WO 2022/239183

(56) References cited:
- EP-A1- 1 924 760
- EP-B1- 1 924 760
- JP-A- S5 759 026
- JP-A- 2007 146 694
- JP-A- 2011 506 821
- JP-A- 2013 139 735
- JP-A- 2013 241 863
- JP-A- 2014 503 046
- JP-A- 2015 063 944
- JP-A- 2015 063 944
- JP-B2- 6 071 639
- JP-U- S61 195 383

## Description

### Technical Field

The present disclosure relates to an exhaust turbine that is rotationally driven by exhaust gas guided thereto from an internal combustion engine, a turbocharger including the exhaust turbine, and a method for cleaning the exhaust turbine.

### Background Art

In a turbocharger, soot dust (carbon) tends to accumulate on parts, such as rotor blades and stator vanes, exposed to combustion gas. When maintenance is neglected to let the soot dust accumulate, a turbine rotates unstably. This results in a risk of deterioration of turbocharger efficiency and occurrence of surging. However, the soot dust adheres to the inside of the turbocharger, and thus cannot be easily removed.

A method for removing the adhering soot dust includes: hot water immersion cleaning, blast cleaning, cleaning with a powdered alkaline cleanser, solid cleaning, water cleaning, and the like. The hot water immersion cleaning, the blast cleaning, and the cleaning with a cleanser are performed while the turbocharger is stopped. The solid cleaning and the water cleaning are performed while the turbocharger is operating. Recently, the solid cleaning has been mainly employed as the method for removing the adhering soot dust (see, for example, Patent Literature 1).

### Citation List

### Patent Literature

Patent Literature 1: Japanese Unexamined Patent Application Publication No. H3-264736A

### Summary of Invention

### Technical Problem

Patent Literature 1 discloses a technique of feeding a solid matter such as walnut shell through a turbine inlet of a turbocharger of a marine diesel engine to remove soot attached to turbine blades of the turbocharger. EP1924760A1 discloses another technique of cleaning a turbocharger turbine by feeding a liquid cleansing agent into the turbine.

However, this simple feeding of the solid matter into the turbine inlet of the turbocharger only enables a certain range inside the turbocharger to be cleaned, meaning that insufficiently cleaned parts remain. In particular, when an exhaust turbine is cleaned using a solid matter, soot dust remaining on part of a certain nozzle blade arranged around a rotor shaft of a turbine wheel may result in occurrence of surging.

The present disclosure has been made in view of such circumstances, and an object of the present disclosure is to provide an exhaust turbine, a turbocharger, and a method for cleaning the exhaust turbine, with which soot attached to a certain nozzle blade can be cleaned off using a solid matter.

### Solution to Problem

An exhaust turbine according to an aspect of the present disclosure includes: an introduction portion extending along an axis and forming an introduction flow path through which exhaust gas guided from an internal combustion engine flows along the axis; a casing portion connected to the introduction portion and forming a swirl flow path, having a spiral shape, through which the exhaust gas flows; a turbine portion rotationally driven, by the exhaust gas guided from the swirl flow path, about a rotor shaft; and a nozzle portion guiding, to the turbine portion, the exhaust gas flowing into the swirl flow path, the nozzle portion being provided with a plurality of nozzle blades along a circumferential direction about the rotor shaft. The introduction portion includes a first feed portion so as to feed a solid cleanser including a solid matter having a predetermined particle size, to the introduction flow path along a first direction crossing an axial direction in which the axis extends, and the first direction is set so that the solid cleanser fed to the introduction flow path is guided to the nozzle portion without contacting an inner wall of the casing portion.

A method for cleaning an exhaust turbine according to an aspect of the present disclosure, the exhaust turbine including an introduction portion extending along an axis and forming an introduction flow path through which exhaust gas guided from an internal combustion engine flows along the axis, a casing portion connected to the introduction portion and forming a swirl flow path, having a spiral shape, through which the exhaust gas flows, a turbine portion rotationally driven, by the exhaust gas guided from the swirl flow path, about a rotor shaft, and a nozzle portion guiding, to the turbine portion, the exhaust gas flowing into the swirl flow path, the nozzle portion being provided with a plurality of nozzle blades along a circumferential direction about the rotor shaft. The method includes: a first cleaning step of feeding a solid cleanser, having a predetermined particle size, to the introduction flow path along a first direction crossing an axial direction in which the axis extends; a second cleaning step of feeding the solid cleanser to the introduction flow path along a second direction crossing the axial direction in which the axis extends; and a third cleaning step of feeding the solid cleanser to the introduction flow path along a third direction crossing the axial direction in which the axis extends. The first direction is set so that the solid cleanser fed to the introduction flow path is guided to the nozzle portion without contacting an inner wall of the casing portion, the second direction and the third direction are set so that the solid cleanser fed to the introduction flow path is guided to the nozzle portion after coming into contact with the inner wall of the casing portion, and an angle formed by the second direction and the axial direction is smaller than an angle formed by the third direction and the axial direction.

### Advantageous Effects of Invention

The present disclosure can provide an exhaust turbine, a turbocharger, and a method for cleaning the exhaust turbine, with which soot attached to a certain nozzle blade can be cleaned off using a solid matter.

### Brief Description of Drawings

FIG. 1 is a diagram illustrating a schematic configuration of a marine diesel engine system according to an embodiment of the present disclosure.
FIG. 2 is a vertical cross-sectional view of the exhaust turbine illustrated in FIG. 1.
FIG. 3 is a cross-sectional view of the exhaust turbine illustrated in FIG. 2, taken along the line indicated by arrows A-A.
FIG. 4 is a cross-sectional view of the exhaust turbine illustrated in FIG. 3, taken along the line indicated by arrows B-B.
FIG. 5 is a cross-sectional view of the exhaust turbine illustrated in FIG. 3, taken along the line indicated by arrows C-C.
FIG. 6 is a flowchart illustrating a method for cleaning the exhaust turbine.

### Description of Embodiments

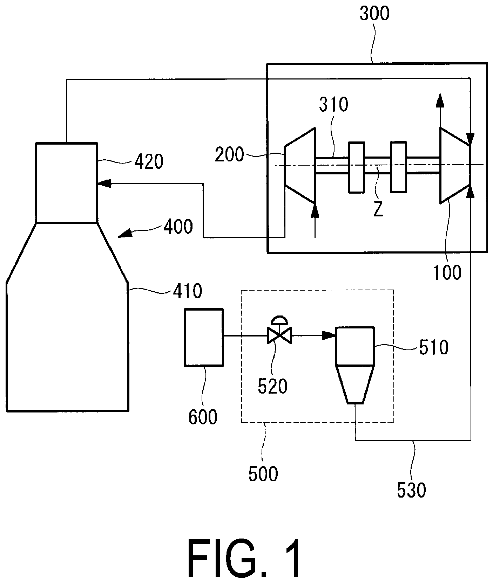

Hereinafter, a marine diesel engine system according to an embodiment of the present disclosure will be described with reference to the drawings. FIG. 1 is a diagram illustrating a schematic configuration of a marine diesel engine system according to an embodiment of the present disclosure.

As illustrated in FIG. 1, the marine diesel engine system (internal combustion engine system) of the present embodiment includes a diesel engine (internal combustion engine) 400, a turbocharger 300, and a cleaning device 500. The turbocharger 300 includes an exhaust turbine 100 and a compressor 200.

The diesel engine 400 is an engine that obtains rotational power through fuel combustion, and is used as a main unit that drives a marine propeller (not illustrated). The diesel engine 400 includes a crank chamber 410 in which a crankshaft (not illustrated) and a connecting rod (not illustrated) connected to the crank shaft are disposed, and a scavenging chamber 420 in which a piston (not illustrated) is disposed.

The scavenging chamber 420 of the diesel engine 400 is supplied with air compressed by the compressor 200 of the turbocharger 300, as combustion air. Exhaust gas, produced by combustion of the combustion air and a fuel in the scavenging chamber 420, is supplied to the exhaust turbine 100 of the turbocharger 300.

The turbocharger 300 is a device that compresses air to generate the compressed air, and supplies the compressed air to the scavenging chamber 420 of the diesel engine 400 as the combustion air. As illustrated in FIG. 1, the turbocharger 300 includes the exhaust turbine 100 and the compressor 200. The compressor 200 is connected to the exhaust turbine 100 via a rotor shaft 310.

The exhaust turbine 100 is a device that rotates, due to exhaust gas guided from the scavenging chamber 420 of the diesel engine 400, about an axis Z in which the rotor shaft 310 extends, to transmit the rotational power to the rotor shaft 310. The rotational power of the exhaust turbine 100 is transmitted to the compressor 200 via the rotor shaft 310. The compressor 200 rotates about the rotor shaft 310 to generate compressed air, and supplies the compressed air to the scavenging chamber 420 of the diesel engine 400.

The cleaning device 500 is a device that performs cleaning by feeding a solid cleanser to the exhaust turbine 100 to remove soot dust (carbon) attached to the inside of the exhaust turbine 100. The cleaning device 500 includes a cleanser container 510 that contains the solid cleanser, and a regulating valve 520 for regulating a flow rate of compressed gas (compressed air for example) supplied from a compressed gas supply source 600 to the cleanser container 510.

The solid cleanser contained in the cleanser container 510 includes solid matters having predetermined particle sizes. This solid matter is, for example, walnut shell, rice, or the like, that applies appropriate impact on the soot dust when colliding thereto, and has appropriate hardness with a low risk of damaging a material forming the exhaust turbine 100. The solid cleanser includes a plurality of types of solid matters having different particle sizes for example. The particle size of the solid cleanser is set to apply appropriate impact on a nozzle blade on which the soot dust is attached, and not to result in clogging between the nozzle blades.

The cleaning device 500 adjusts the regulating valve 520 at a predetermined timing while the marine diesel engine system is under operation, to supply the compressed gas to the cleanser container 510, and thus feeds the solid cleanser, conveyed from the cleanser container 510 together with the compressed gas, to the exhaust turbine 100 through a feed pipe 530. The solid cleanser supplied from the cleaning device 500 to the exhaust turbine 100 is supplied to an introduction pipe 10 of the exhaust turbine 100 at a speed of several meters/sec to several tens of meters/sec for example.

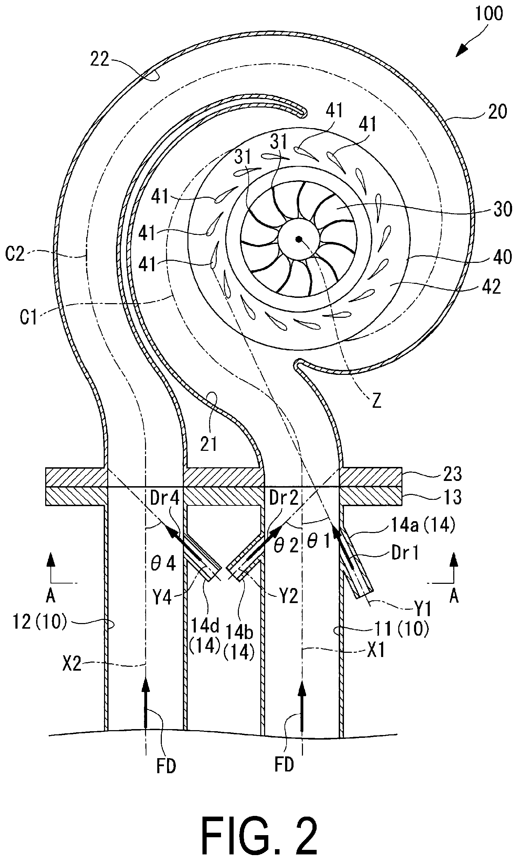

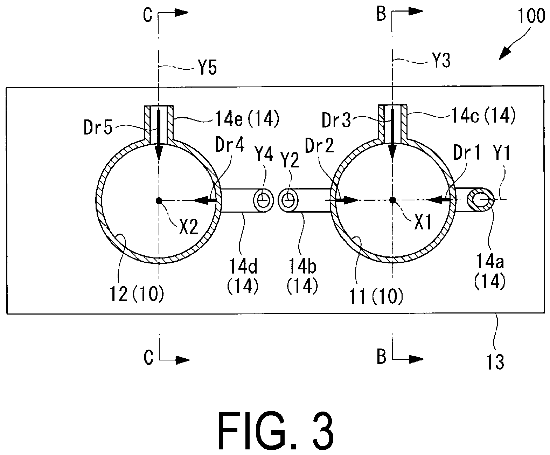

Next, details of the exhaust turbine 100 will be described with reference to the drawings. FIG. 2 is a vertical cross-sectional view of the exhaust turbine 100 illustrated in FIG. 1. FIG. 3 is a cross-sectional view of the exhaust turbine 100 illustrated in FIG. 2, taken along the line indicated by arrows A-A. As illustrated in FIG. 2, the exhaust turbine 100 includes the introduction pipe (introduction portion) 10, a casing portion 20, a turbine portion 30, and a nozzle portion 40. In FIG. 2, reference sign FD indicates a flow direction of the exhaust gas guided from the diesel engine 400.

The introduction pipe 10 is a pipe forming a first introduction flow path 11 and a second introduction flow path 12. The first introduction flow path 11 extends along an axis X1, and makes the exhaust gas, guided from the diesel engine 400, flow along the axis X1. The second introduction flow path 12 extends along an axis X2, and makes the exhaust gas, guided from the diesel engine 400, flow along the axis X2. The first introduction flow path 11 is a flow path extending linearly along the axis X1. The second introduction flow path 12 is a flow path extending linearly along the axis X2.

A flange portion 13 for connecting the introduction pipe 10 and the casing portion 20 to each other, is formed at an end portion of the introduction pipe 10 on the casing portion 20 side. The introduction pipe 10 and the casing portion 20 are connected to each other, when the flange portion 13 is fastened to a flange portion 23 of the casing portion 20 using fastening tools (not illustrated) including bolts and nuts.

The casing portion 20 is a case that is connected to the introduction pipe 10, and guides the exhaust gas to the turbine portion 30 and the nozzle portion 40. The casing portion 20 includes a first swirl flow path 21, a second swirl flow path 22, and the flange portion 23. The casing portion 20 forms the first swirl flow path 21 and the second swirl flow path 22, and guides the exhaust gas, guided from the introduction pipe 10, to the nozzle portion 40 and the turbine portion 30. While the casing portion 20 is described herein to include two swirl flow paths, that is, the first swirl flow path 21 and the second swirl flow path 22, the casing portion 20 may include only the first swirl flow path 21.

The first swirl flow path 21 is a flow path of having a spiral shape and is connected to the first introduction flow path 11 of the introduction pipe 10 to make the exhaust gas flow therein. The first swirl flow path 21 makes the exhaust gas, flowing thereto from the first introduction flow path 11 along the linearly extending axis X1, flow clockwise about the axis Z, along an axis C1 swirling about the axis Z passing through the center of the rotor shaft 310, to be guided to the nozzle portion 40.

As illustrated in FIG. 2, the first swirl flow path 21 is disposed closer to the inner circumference side than the second swirl flow path 22, relative to the axis Z. The first swirl flow path 21 makes the exhaust gas flow into a region corresponding to the half circumference of the nozzle portion 40 arranged to be in a form of a ring around the axis Z (region closer to the left side than the axis Z illustrated in FIG. 2).

The second swirl flow path 22 is a flow path having a spiral shape and is connected to the second introduction flow path 12 of the introduction pipe 10 to make the exhaust gas flow therein. The second swirl flow path 22 makes the exhaust gas, flowing thereto from the second introduction flow path 12 along the linearly extending axis X2, flow clockwise about the axis Z, along an axis C2 swirling about the axis Z passing through the center of the rotor shaft 310, to be guided to the nozzle portion 40.

As illustrated in FIG. 2, the second swirl flow path 22 is disposed closer to the outer circumference side than the first swirl flow path 21, relative to the axis Z. The second swirl flow path 22 makes the exhaust gas flow into a region corresponding to the half circumference of the nozzle portion 40 arranged to be in a form of a ring around the axis Z (region closer to the right side than the axis Z illustrated in FIG. 2).

The turbine portion 30 is housed in the casing portion 20 and is rotationally driven about the axis Z (about the rotor shaft 310) by the exhaust gas guided from the first swirl flow path 21 and the second swirl flow path 22 via the nozzle portion 40. The turbine portion 30 includes a plurality of turbine blades 31.

The nozzle portion 40 is a device that guides the exhaust gas, flowed into the first swirl flow path 21 and the second swirl flow path 22, to the turbine portion 30, and converts pressure energy of the exhaust gas into speed energy. The nozzle portion 40 includes a plurality of nozzle blades 41 arranged at an equal interval along the circumferential direction around the axis Z (around the rotor shaft 310), and a nozzle ring 42 to which the plurality of nozzle blades 41 are attached.

The nozzle portion 40 forms a plurality of closed flow paths partitioned by the plurality of nozzle blades 41 and the nozzle ring 42. With the nozzle portion 40, the exhaust gas passes through the closed flow paths having a smaller cross-sectional area than the first swirl flow path 21 and the second swirl flow path 22 to have an increased flow velocity, and thus the exhaust gas having the increased flow velocity is guided to the turbine portion 30. Furthermore, with the nozzle portion 40, the vector (velocity component) of the exhaust gas guided to the turbine portion 30 is adjusted to be in a direction suitable for the turbine blades 31.

Next, a detailed description will be given on a cleanser feed portion 14 provided in the introduction pipe 10. The introduction pipe 10 includes the cleanser feed portion 14 that guides the solid cleanser, supplied from the cleaning device 500 through the feed pipe 530, to the first introduction flow path 11 and the second introduction flow path 12. As illustrated in FIG. 2 and FIG. 3, the cleanser feed portion 14 includes a first feed portion 14a, a second feed portion 14b, and a third feed portion 14c with which the solid cleanser is fed to the first introduction flow path 11, as well as a fourth feed portion 14d and a fifth feed portion 14e with which the solid cleanser is fed to the second introduction flow path 12.

The first feed portion 14a, the second feed portion 14b, and the third feed portion 14c are each a linearly extending cylindrical tube, and are integrally formed with a portion of the introduction pipe 10, forming the first introduction flow path 11. Each of the first feed portion 14a, the second feed portion 14b, and the third feed portion 14c is connected to the feed pipe 530, when the solid cleanser is to be fed therethrough. The first feed portion 14a, the second feed portion 14b, and the third feed portion 14c are sealed by a sealing member (not illustrated) so as not to be in communication with the outside, when not being connected to the feed pipe 530.

With the first feed portion 14a, the solid cleanser is fed to the first introduction flow path 11 along a first direction Dr1 crossing an axial direction in which the axis X1 extends. As illustrated in FIG. 2, the first direction Dr1 is a direction linearly extending along an axis Y1. As illustrated in FIGS. 2 and 3, the axis Y1 extends in a direction to pass through and cross the axis X1. As illustrated in FIG. 2, in a plane through which both the axis X1 and the axis Y1 pass, the axis X1 and the axis Y1 form an angle θ1.

As illustrated in FIG. 2, the first direction Dr1 in which the solid cleanser is fed from the first feed portion 14a is set so that the nozzle blades 41 of the nozzle portion 40 are disposed on the extension line of the axis Y1. In other words, the first direction Dr1 in which the solid cleanser is fed from the first feed portion 14a is set so that the solid cleanser fed to the first introduction flow path 11 is directly guided to the nozzle blades 41 without contacting an inner wall of the casing portion 20.

With the second feed portion 14b, the solid cleanser is fed to the first introduction flow path 11 along a second direction Dr2 crossing the axial direction in which the axis X1 extends. As illustrated in FIG. 2, the second direction Dr2 is a direction linearly extending along an axis Y2. As illustrated in FIGS. 2 and 3, the axis Y2 extends in a direction to pass through and cross the axis X1. As illustrated in FIG. 2, in a plane through which both the axis X1 and the axis Y2 pass, the axis X1 and the axis Y2 form an angle θ2. The angle θ2 is larger than θ1, and is set to be in a range of 25° < θ2 < 65°, for example. Preferably, θ2 is 45°.

As illustrated in FIG. 2, the second direction Dr2 in which the solid cleanser is fed from the second feed portion 14b is set so that the first swirl flow path 21 is disposed on the extension line of the axis Y2. In other words, the second direction Dr2 in which the solid cleanser is fed from the second feed portion 14b is set so that the solid cleanser fed to the first introduction flow path 11 is guided to the nozzle portion 40 after coming into contact with the inner wall of the casing portion 20.

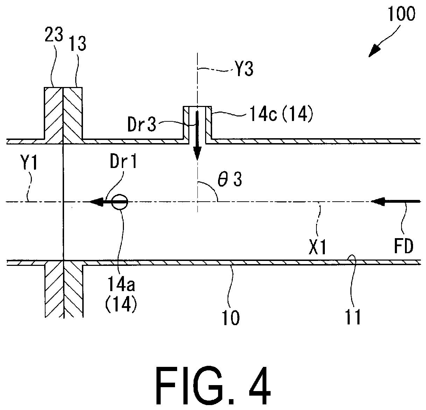

With the third feed portion 14c, the solid cleanser is fed to the first introduction flow path 11 along a third direction Dr3 crossing the axial direction in which the axis X1 extends. As illustrated in FIGS. 3 and 4, the third direction Dr3 is a direction linearly extending along an axis Y3. As illustrated in FIGS. 3 and 4, the axis Y3 extends in a direction to pass through and cross the axis X1. As illustrated in FIG. 4, in a plane through which both the axis X1 and the axis Y3 pass, the axis X1 and the axis Y3 form an angle θ3. The angle θ3 is larger than θ1 and θ2, and is set to be in a range of 70° < θ3 < 110°, for example. Preferably, θ3 is 90°.

As illustrated in FIGS. 3 and 4, the third direction Dr3 in which the solid cleanser is fed from the third feed portion 14c is set so that the first introduction flow path 11 is disposed on the extension line of the axis Y3. In other words, the third direction Dr3 in which the solid cleanser is fed from the third feed portion 14c is set so that the solid cleanser, fed to the first introduction flow path 11, is guided to the nozzle portion 40 after contacting the inner wall of the introduction pipe 10 and the casing portion 20. When θ3 is set to 90°, the flow of the solid cleanser fed from the third feed portion 14c to the first introduction flow path 11 does not have a velocity component along the axis X1, but is provided with a velocity component along the axis X1 due to the flow of the exhaust gas.

The fourth feed portion 14d and the fifth feed portion 14e are each a linearly extending cylindrical tube, and are integrally formed with a portion of the introduction pipe 10, forming the second introduction flow path 12. Each of the fourth feed portion 14d and the fifth feed portion 14e is connected to the feed pipe 530, when the solid cleanser is to be fed therethrough. The fourth feed portion 14d and the fifth feed portion 14e are sealed by a sealing member (not illustrated) so as not to be in communication with the outside, when not being connected to the feed pipe 530.

With the fourth feed portion 14d, the solid cleanser is fed to the second introduction flow path 12 along a fourth direction Dr4 crossing an axial direction in which the axis X2 extends. As illustrated in FIG. 2, the fourth direction Dr4 is a direction linearly extending along an axis Y4. As illustrated in FIGS. 2 and 3, the axis Y4 extends in a direction to pass through and cross the axis X2. As illustrated in FIG. 2, in a plane through which both the axis X2 and the axis Y4 pass, the axis X2 and the axis Y4 form an angle θ4. The angle θ4 is larger than θ1, and is set to be in a range of 25° < θ4 < 65°, for example. Preferably, θ4 is 45°.

As illustrated in FIG. 2, the fourth direction Dr4 in which the solid cleanser is fed from the fourth feed portion 14d is set so that the second swirl flow path 22 is disposed on the extension line of the axis Y4. In other words, the fourth direction Dr4 in which the solid cleanser is fed from the fourth feed portion 14d is set so that the solid cleanser fed to the second introduction flow path 12 is guided to the nozzle portion 40 after coming into contact with the inner wall of the casing portion 20.

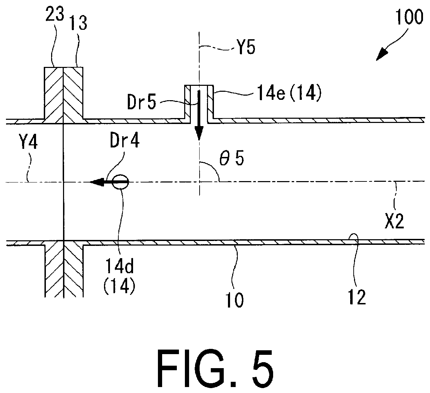

With the fifth feed portion 14e, the solid cleanser is fed to the second introduction flow path 12 along a fifth direction Dr5 crossing the axial direction in which the axis X2 extends. As illustrated in FIGS. 3 and 5, the fifth direction Dr5 is a direction linearly extending along an axis Y5. As illustrated in FIGS. 3 and 5, the axis Y5 extends in a direction to pass through and cross the axis X2. As illustrated in FIG. 5, in a plane through which both the axis X2 and the axis Y5 pass, the axis X2 and the axis Y5 form an angle θ5. The angle θ5 is larger than θ1 and θ4, and is set to be in a range of 70° < θ5 < 110°, for example. Preferably, θ5 is 90°.

As illustrated in FIGS. 3 and 5, the fifth direction Dr5 in which the solid cleanser is fed from the fifth feed portion 14e is set so that the second introduction flow path 12 is disposed on the extension line of the axis Y5. In other words, the fifth direction Dr5 in which the solid cleanser is fed from the fifth feed portion 14e is set so that the solid cleanser fed to the second introduction flow path 12 is guided to the nozzle portion 40 after coming into contact with the inner wall of the introduction pipe 10 and the casing portion 20. When θ5 is set to 90°, the flow of the solid cleanser fed from the fifth feed portion 14e to the second introduction flow path 12 does not have a velocity component along the axis X2, but is provided with a velocity component along the axis X2 due to the flow of the exhaust gas.

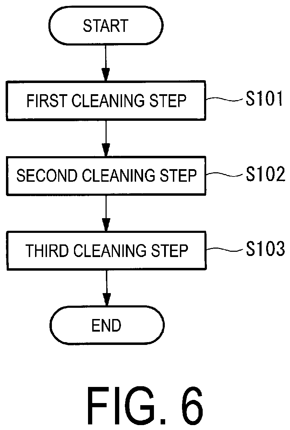

Next, a method for cleaning the exhaust turbine 100 according to the present embodiment will be described with reference to a drawing. FIG. 6 is a flowchart illustrating a method for cleaning the exhaust turbine 100 according to the present embodiment.

In step S101, an operator connects the end portion of the feed pipe 530 to the first feed portion 14a, and seals the second feed portion 14b, the third feed portion 14c, the fourth feed portion 14d, and the fifth feed portion 14e, using the sealing member (such as a valve not illustrated). Then, to feed the solid cleanser to the first introduction flow path 11 from the first feed portion 14a along the first direction Dr1, the operator adjusts the regulating valve 520, and adjusts the amount of the compressed gas supplied from the compressed gas supply source 600 to the cleanser container 510.

The cleaning device 500 conveys the solid cleanser by means of the compressed gas supplied from the compressed gas supply source 600 to the cleanser container 510, and guides the solid cleanser to the first feed portion 14a through the feed pipe 530. With the first feed portion 14a, the solid cleanser guided from the feed pipe 530 is fed to the first introduction flow path 11 along the first direction Dr1.

After the solid cleanser has been continuously supplied to the first feed portion 14a for a predetermined period of time, the operator seals the first feed portion 14a using the sealing member. Then, the regulating valve 520 is adjusted to stop the supply of the compressed gas from the compressed gas supply source 600 to the cleanser container 510. After the supply of the compressed gas has been stopped, the operator detaches the end portion of the feed pipe 530 from the first feed portion 14a.

In step S102, the operator connects the end portion of the feed pipe 530 to the second feed portion 14b and the fourth feed portion 14d, and seals the first feed portion 14a, the third feed portion 14c, and the fifth feed portion 14e using the sealing member. Then, to feed the solid cleanser from the second feed portion 14b to the first introduction flow path 11 along the second direction Dr2, and to feed the solid cleanser from the fourth feed portion 14d to the second introduction flow path 12 along the fourth direction Dr4, the operator adjusts the regulating valve 520 and adjusts the amount of the compressed gas supplied from the compressed gas supply source 600 to the cleanser container 510.

The cleaning device 500 conveys the solid cleanser by means of the compressed gas supplied from the compressed gas supply source 600 to the cleanser container 510, and guides the solid cleanser to the second feed portion 14b and the fourth feed portion 14d through the feed pipe 530. With the second feed portion 14b, the solid cleanser guided from the feed pipe 530 is fed to the first introduction flow path 11 along the second direction Dr2. With the fourth feed portion 14d, the solid cleanser guided from the feed pipe 530 is fed to the second introduction flow path 12 along the fourth direction Dr4.

After the solid cleanser has been continuously supplied to the second feed portion 14b and the fourth feed portion 14d for a predetermined period of time, the operator seals the second feed portion 14b and the fourth feed portion 14d using the sealing member. Then, the regulating valve 520 is adjusted to stop the supply of the compressed gas from the compressed gas supply source 600 to the cleanser container 510. After the supply of the compressed gas has been stopped, the operator detaches the end portion of the feed pipe 530 from the second feed portion 14b and the fourth feed portion 14d.

In step S103, the operator connects the end portion of the feed pipe 530 to the third feed portion 14c and the fifth feed portion 14e, and seals the first feed portion 14a, the second feed portion 14b, and the fourth feed portion 14d using the sealing member. Then, to feed the solid cleanser from the third feed portion 14c to the first introduction flow path 11 along the third direction Dr3, and to feed the solid cleanser from the fifth feed portion 14e to the second introduction flow path 12 along the fifth direction Dr5, the operator adjusts the regulating valve 520 and adjusts the amount of the compressed gas supplied from the compressed gas supply source 600 to the cleanser container 510.

The cleaning device 500 conveys the solid cleanser by means of the compressed gas supplied from the compressed gas supply source 600 to the cleanser container 510, and guides the solid cleanser to the third feed portion 14c and the fifth feed portion 14e through the feed pipe 530. With the third feed portion 14c, the solid cleanser guided from the feed pipe 530 is fed to the first introduction flow path 11 along the third direction Dr3. With the fifth feed portion 14e, the solid cleanser guided from the feed pipe 530 is fed to the second introduction flow path 12 along the fifth direction Dr5.

After the solid cleanser has been continuously supplied to the third feed portion 14c and the fifth feed portion 14e for a predetermined period of time, the operator seals the third feed portion 14c and the fifth feed portion 14e using the sealing member. Then, the regulating valve 520 is adjusted to stop the supply of the compressed gas from the compressed gas supply source 600 to the cleanser container 510. After the supply of the compressed gas has been stopped, the operator detaches the end portion of the feed pipe 530 from the third feed portion 14c and the fifth feed portion 14e.

In the method for cleaning the exhaust turbine 100 described above, the first cleaning step (S101) of feeding the solid cleanser with the first feed portion 14a, the second cleaning step (S102) of feeding the solid cleanser with the second feed portion 14b and the fourth feed portion 14d, and the third cleaning step (S103) of feeding the solid cleanser with the third feed portion 14c and the fifth feed portion 14e are performed at independent timings. In other words, the feeding of the solid cleanser with the first feed portion 14a, the feeding of the solid cleanser with the second feed portion 14b and the fourth feed portion 14d, and the feeding of the solid cleanser with the third feed portion 14c and the fifth feed portion 14e are not simultaneously performed.

This is because a plurality of cleaning steps simultaneously performed results in a large pressure loss of the compressed gas including the solid cleanser guided to the introduction pipe 10 or interference between solid cleansers fed to the introduction pipe 10 in the respective cleaning steps, meaning that the solid cleanser may fail to appropriately reach the nozzle blades 41 of the nozzle portion 40.

In the above description, the operator adjusts the regulating valve 520 to adjust the amount of the compressed gas supplied from the compressed gas supply source 600 to the cleanser container 510. However, another mode may be employed. For example, the processes illustrated in FIG. 6 may be executed with a control device (not illustrated) transmitting a control command to the regulating valve 520.

In the description above, the first cleaning step (S 101) of feeding the solid cleanser with the first feed portion 14a, the second cleaning step (S 102) of feeding the solid cleanser with the second feed portion 14b and the fourth feed portion 14d, and the third cleaning step (S 103) of feeding the solid cleanser with the third feed portion 14c and the fifth feed portion 14e are performed in this order. However, another mode may be employed. The first cleaning step, the second cleaning step, and the third cleaning step may be performed in any order, such as the order of the second cleaning step, the first cleaning step, and the third cleaning step for example.

The actions and effects exhibited by the exhaust turbine 100 of the above-described present embodiment will now be described.

With the exhaust turbine 100 according to the present disclosure, the exhaust gas guided from the diesel engine 400 flows along the axis X1 in the first introduction flow path 11 formed in the introduction pipe 10, flows along the first swirl flow path 21 formed by the inner wall of the casing portion 20 connected to the introduction pipe 10, passes through the nozzle portion 40 to have an increased velocity, and then is guided to the turbine portion 30. With the first feed portion 14a of the introduction pipe 10, the solid cleanser is fed along the first direction Dr1 crossing the axial direction in which the axis X1 extends. The first direction Dr1 in which the solid cleanser is fed from the first feed portion 14a is set so that the solid cleanser is directly guided to the nozzle portion 40 without contacting the inner wall of the casing portion 20. Thus, the solid cleanser fed to the first introduction flow path 11 along the first direction Dr1 directly hits the nozzle blades 41 of the nozzle portion 40 on the extension line of the first direction Dr1, whereby soot attached to a certain nozzle blade 41 can be cleaned off using a solid matter.

With the exhaust turbine 100 according to the present disclosure, the solid cleanser fed to the first introduction flow path 11 along the second direction Dr2 advances in the first swirl flow path 21 while coming into contact with the inner wall of the casing portion 20 to have the direction of advancement changed. Thus, the cleanser fed from the second feed portion 14b mainly hits a nozzle blade 41 different from the nozzle blade 41 hit by the solid cleanser fed from the first feed portion 14a, whereby soot attached to the other nozzle blade 41 can be cleaned off using a solid matter.

With the exhaust turbine 100 according to the present disclosure, the solid cleanser fed to the first introduction flow path 11 along the third direction Dr3 advances in the first swirl flow path 21 while coming into contact with the inner wall of the casing portion 20 to have the direction of advancement changed. Thus, the cleanser fed from the third feed portion 14c mainly hits a nozzle blade 41 different from the nozzle blade 41 hit by the solid cleanser fed from the first feed portion 14a, whereby soot attached to the other nozzle blade 41 can be cleaned off using a solid matter.

With the exhaust turbine 100 according to the present disclosure, the angle θ2 formed by the second direction Dr2 and the axis X1 direction is smaller than the angle θ3 formed by the third direction Dr3 and the axis X1 direction. As a result, a position around the axis Z where the main flow of the solid cleanser fed from the second feed portion 14b passes through the nozzle portion 40 is different from a position around the axis Z where the main flow of the solid cleanser fed from the third feed portion 14c passes through the nozzle portion 40. Thus, using the solid cleanser fed from the second feed portion 14b and the solid cleanser fed from the third feed portion 14c, nozzle blades 41 at different positions around the axis Z of the nozzle portion 40 can be cleaned.

With the exhaust turbine 100 according to the present disclosure, the solid cleanser includes a plurality of types of solid matters having different particle sizes. While the solid cleanser, fed from the first feed portion 14a, the second feed portion 14b, and the third feed portion 14c to the first introduction flow path 11 swirls in the first swirl flow path 21, the plurality of types of solid matters receive different magnitudes of centrifugal force. Thus, compared with a case where the solid cleanser only includes solid matters having the same particle size, the solid cleanser is dispersed over a wide range around the axis Z of the nozzle portion 40, so that more nozzle blades 41 can be cleaned.

The exhaust turbine (100), which has been described in the embodiments described above, is understood as follows, for example.

An exhaust turbine (100) according to the present disclosure includes: an introduction portion (10) extending along an axis (X1) and forming an introduction flow path (11) in which exhaust gas guided from an internal combustion engine (400) flows along the axis (X1); a casing portion (20) connected to the introduction portion (10) and forming a swirl flow path (21), having a spiral shape, in which the exhaust gas flows; a turbine portion (30) rotationally driven, by the exhaust gas guided from the swirl flow path (21), about a rotor shaft (310); and a nozzle portion (40) guiding the exhaust gas, flowed into the swirl flow path (21), to the turbine portion (30), the nozzle portion being provided with a plurality of nozzle blades (41) along a circumferential direction about the rotor shaft (310). The introduction portion (10) includes a first feed portion (14a) so as feed a solid cleanser having a predetermined particle size, to the introduction flow path (11) along a first direction (Dr1) crossing an axial direction in which the axis (X1) extends, and the first direction (Dr1) is set so that the solid cleanser fed to the introduction flow path (11) is guided to the nozzle portion (40) without contacting an inner wall of the casing portion (20).

With the exhaust turbine according to the present disclosure, the exhaust gas guided from the internal combustion engine to the introduction flow path flows along the axis in the introduction flow path formed in the introduction portion, flows along the swirl flow path formed by the casing portion connected to the introduction portion, passes through the nozzle portion to have an increased velocity, and then is guided to the turbine portion. With the first feed portion of the introduction portion, the solid cleanser is fed along the first direction crossing the axial direction in which the axis extends. The first direction in which the solid cleanser is fed from the first feed portion is set so that the solid cleanser directly is guided to the nozzle portion without contacting the inner wall of the casing portion. Thus, the solid cleanser fed to the introduction flow path along the first direction directly hits the nozzle blades of the nozzle portion on the extension line of the first direction, whereby soot attached to a certain nozzle blade can be cleaned off using a solid matter.

In the exhaust turbine according to the present disclosure, the introduction portion (10) includes a second feed portion (14b) so as to feed the solid cleanser to the introduction flow path (11) along a second direction (Dr2) crossing the axial direction in which the axis (X1) extends, and the second direction (Dr2) is set so that the solid cleanser fed to the introduction flow path (11) is guided to the nozzle portion (40) after coming into contact with the inner wall of the casing portion (20).

With the exhaust turbine according to the present disclosure, the solid cleanser fed to the introduction flow path along the second direction advances in the swirl flow path while coming into contact with the inner wall of the casing portion to have the direction of advancement changed. Thus, the cleanser fed from the second feed portion mainly hits a nozzle blade different from the nozzle blade hit by the solid cleanser fed from the first feed portion, whereby soot attached to the other nozzle blade can be cleaned off using a solid matter.

In the exhaust turbine according to the present disclosure, the introduction portion (10) includes a third feed portion (14c) so as to feed the solid cleanser to the introduction flow path (11) along a third direction (Dr3) crossing the axial direction in which the axis (X1) extends. The third direction (Dr3) is set so that the solid cleanser fed to the introduction flow path (11) is guided to the nozzle portion (40) after coming into contact with the inner wall of the casing portion (20). An angle (θ2) formed by the second direction (Dr2) and the axial direction is smaller than an angle (θ3) formed by the third direction (Dr3) and the axial direction.

With the exhaust turbine according to the present disclosure, the solid cleanser fed to the introduction flow path along the third direction advances in the swirl flow path while coming into contact with the inner wall of the casing portion to have the direction of advancement changed. Thus, the cleanser fed from the third feed portion hits a nozzle blade different from the nozzle blade hit by the solid cleanser fed from the first feed portion, whereby soot attached to the other nozzle blade can be cleaned off using a solid matter.

With the exhaust turbine according to the present disclosure, the angle formed by the second direction and the axial direction is smaller than the angle formed by the third direction and the axial direction. As a result, a position around the rotor shaft where the main flow of the solid cleanser fed from the second feed portion passes through the nozzle portion is different from a position around the rotor shaft where the main flow of the solid cleanser fed from the third feed portion passes through the nozzle portion. Thus, using the solid cleanser fed from the second feed portion and the solid cleanser fed from the third feed portion, nozzle blades at different positions around the rotor shaft of the nozzle portion can be cleaned.

In the exhaust turbine according to the present disclosure, the solid cleanser includes a plurality of types of the solid matters having different particle sizes.

With the exhaust turbine according to the present disclosure, the solid cleanser includes a plurality of types of solid matters having different particle sizes. While the solid cleanser, fed from the feed portion to the introduction flow path, swirls in the swirl flow path, the plurality of types of solid matters receive different magnitudes of centrifugal force. Thus, compared with a case where the solid cleanser only includes solid matters having the same particle size, the solid cleanser is dispersed over a wide range around the rotor shaft of the nozzle portion, so that more nozzle blades can be cleaned.

The turbocharger (300) described in the embodiment described above is understood as follows, for example.

A turbocharger according to the present disclosure includes: the exhaust turbine (100) according to any of the above configurations; and a compressor (200) connected to the exhaust turbine (100) via a rotor shaft and configured to rotate about the rotor shaft (310) to generate compressed air and supply the compressed air to the internal combustion engine (400).

With the turbocharger according to the present disclosure, in the exhaust turbine provided in the turbocharger, the exhaust gas guided from the internal combustion engine to the introduction flow path flows along the axis in the introduction flow path formed in the introduction portion, flows along the swirl flow path formed by the casing portion connected to the introduction portion, passes through the nozzle portion to have an increased velocity, and then is guided to the turbine portion. With the first feed portion of the introduction portion, the solid cleanser is fed along the first direction crossing the axial direction in which the axis extends. The first direction in which the solid cleanser is fed from the first feed portion is set so that the solid cleanser is directly guided to the nozzle portion without contacting the casing portion. Thus, the solid cleanser fed to the introduction flow path along the first direction directly hits the nozzle blades of the nozzle portion on the extension line of the first direction, whereby soot attached to a certain nozzle blade can be cleaned off using a solid matter.

The method for cleaning the exhaust turbine, which has been described in the embodiment described above, is understood as follows, for example.

A method for cleaning an exhaust turbine (100) according to the present disclosure, the exhaust turbine (100) including: an introduction portion (10) extending along an axis (X1) and forming an introduction flow path (11) through which exhaust gas guided from an internal combustion engine (400) flows along the axis (X1), a casing portion (20) connected to the introduction portion (10) and forming a swirl flow path (21), having a spiral shape, in which the exhaust gas flows, a turbine portion (30) contained in the casing portion (20) and rotationally driven, by the exhaust gas guided from the swirl flow path (21), about a rotor shaft (310), and a nozzle portion (40) guiding, to the turbine portion (30), the exhaust gas flowing into the swirl flow path (21), the nozzle portion (40) being provided with a plurality of nozzle blades (41) along a circumferential direction about the rotor shaft (310). The method includes: a first cleaning step (S 101) of feeding a solid cleanser, having a predetermined particle size, to the introduction flow path (11) along a first direction (Dr1) crossing an axial direction in which the axis (X1) extends; a second cleaning step (S 102) of feeding the solid cleanser to the introduction flow path (11) along a second direction (Dr2) crossing the axial direction in which the axis (X1) extends; and a third cleaning step (S103) of feeding the solid cleanser to the introduction flow path (11) along a third direction (Dr3) crossing the axial direction in which the axis (X1) extends, in which the first direction (Dr1) is set to make the solid cleanser, fed to the introduction flow path (11), guided to the nozzle portion (40) without coming into contact with the casing portion (20), the second direction (Dr2) and the third direction (Dr3) are set to make the solid cleanser, fed to the introduction flow path (11), guided to the nozzle portion (40) after coming into contact with the casing portion (20), and an angle (θ2) formed by the second direction (Dr2) and the axial direction is smaller than an angle (θ3) formed by the third direction (Dr3) and the axial direction.

With the method for cleaning the exhaust turbine according to the present disclosure, the exhaust gas guided from the internal combustion engine to the introduction flow path flows along the axis in the introduction flow path formed in the introduction portion, flows along the swirl flow path formed by the casing portion connected to the introduction portion, passes through the nozzle portion to have an increased velocity, and then is guided to the turbine portion. In the first cleaning step, the solid cleanser is fed along the first direction crossing the axial direction in which the axis extends. The first direction in which the solid cleanser is fed in the first cleaning step is set so that the solid cleanser is directly guided to the nozzle portion without contacting the casing portion. Thus, the solid cleanser fed to the introduction flow path along the first direction directly hits the nozzle blades of the nozzle portion on the extension line of the first direction, whereby soot attached to a certain nozzle blade can be cleaned off using a solid matter.

With the method for cleaning the exhaust turbine according to the present disclosure, the solid cleanser fed to the introduction flow path along the second direction advances in the swirl flow path while coming into contact with the casing portion to have the direction of advancement changed. Thus, the cleanser fed in the second cleaning step hits a nozzle blade different from the nozzle blade hit by the solid cleanser fed in the first feeding step, whereby soot attached to the other nozzle blade can be cleaned off using a solid matter. The solid cleanser fed to the introduction flow path along the third direction advances in the swirl flow path while coming into contact with the casing portion to have the direction of advancement changed. Thus, the cleanser fed in the third cleaning step hits a nozzle blade different from the nozzle blade hit by the solid cleanser fed in the first feeding step, whereby soot attached to the other nozzle blade can be cleaned off using a solid matter.

With the method for cleaning the exhaust turbine according to the present disclosure, the angle formed by the second direction and the axial direction is smaller than the angle formed by the third direction and the axial direction. As a result, a position around the rotor shaft where the main flow of the solid cleanser fed in the second cleaning step passes through the nozzle portion is different from a position around the rotor shaft where the main flow of the solid cleanser fed in the third cleaning step passes through the nozzle portion. Thus, using the solid cleanser fed in the second cleaning step and the solid cleanser fed in the third cleaning step, nozzle blades at different positions around the rotor shaft of the nozzle portion can be cleaned.

In the method for cleaning the exhaust turbine according to the present disclosure, the first cleaning step, the second cleaning step, and the third cleaning step are executed at independent timings.

With the method for cleaning the exhaust turbine according to the present disclosure, the feeding of the solid cleanser in the first cleaning step, the feeding of the solid cleanser in the second cleaning step, and the feeding of the solid cleanser in the third cleaning step are not simultaneously performed. Thus, a failure of the solid cleanser appropriately reaching the nozzle blades of the nozzle portion due to a large pressure loss of the gas including the solid cleanser guided to the introduction portion or interference between solid cleansers fed to the introduction portion can be suppressed.

### Reference Signs List

10 Introduction pipe (introduction portion)
11 First introduction flow path
12 Second introduction flow path
14 Cleanser feed portion
14a First feed portion
14b Second feed portion
14c Third feed portion
14d Fourth feed portion
14e Fifth feed portion
20 Casing portion
21 First swirl flow path
22 Second swirl flow path
30 Turbine portion
40 Nozzle portion
41 Nozzle blade
42 Nozzle ring
100 Exhaust turbine
200 Compressor
300 Turbocharger
310 Rotor shaft
400 Diesel engine (internal combustion engine)
500 Cleaning device
510 Cleanser container
520 Regulating valve
530 Feed pipe
600 Compressed gas supply source
Dr1 First direction
Dr2 Second direction
Dr3 Third direction
X1, X2, Y1, Y2, Y3, Y4, Y5, Z Axis

## Claims

1. An exhaust turbine (100) comprising:
an introduction portion (14) extending along an axis (X1) and forming an introduction flow path (11) through which exhaust gas guided from an internal combustion engine flows along the axis;
a casing portion (20) connected to the introduction portion (14) and forming a swirl flow path (21), having a spiral shape, through which the exhaust gas flows;
a turbine portion (30) rotationally driven, by the exhaust gas guided from the swirl flow path (21), about a rotor shaft (310);
and
a nozzle portion (40) guiding, to the turbine portion (30), the exhaust gas flowing into the swirl flow path (21), the nozzle portion (40) being provided with a plurality of nozzle blades (41) along a circumferential direction about the rotor shaft (310), wherein
the introduction portion (14) includes a first feed portion (14a) configured to feed a solid cleanser including a solid matter having a predetermined particle size, to the introduction flow path (11) along a first direction (Dr1) crossing an axial direction in which the axis (X1) extends, and
the first direction (Dr1) is set so that the solid cleanser fed to the introduction flow path (11) is guided to the nozzle portion (40) without contacting an inner wall of the casing portion (20).

2. The exhaust turbine according to claim 1, wherein
the introduction portion (14) includes a second feed portion (14b) so as to feed the solid cleanser to the introduction flow path (11) along a second direction (Dr2) crossing the axial direction in which the axis (X1) extends, and
the second direction (Dr2) is set so that the solid cleanser fed to the introduction flow path (11) is guided to the nozzle portion (40) after coming into contact with the inner wall of the casing portion (20).

3. The exhaust turbine according to claim 2, wherein
the introduction portion (14) includes a third feed portion (14c) so as to feed the solid cleanser to the introduction flow path (11) along a third direction (Dr3) crossing the axial direction in which the axis (X1) extends,
the third direction (Dr3) is set so that the solid cleanser fed to the introduction flow path (11) is guided to the nozzle portion (40) after coming into contact with the inner wall of the casing portion (20), and
an angle formed by the second direction (Dr2) and the axial direction is smaller than an angle formed by the third direction (Dr3) and the axial direction.

4. The exhaust turbine according to any one of claims 1 to 3, wherein the solid cleanser includes a plurality of types of the solid matters having different particle sizes.

5. A turbocharger (300) comprising:
the exhaust turbine (100) according to any one of claims 1 to 4; and
a compressor (200) configured to generate compressed air and supply the compressed air to the internal combustion engine, the compressor (200) being connected to the exhaust turbine (100) via a rotor shaft (310) and rotating about the rotor shaft (310).

6. A method for cleaning an exhaust turbine (100), the exhaust turbine (100) including:
an introduction portion (14) extending along an axis (X1) and forming an introduction flow path (11) through which exhaust gas guided from an internal combustion engine (400) flows along the axis (X1);
a casing portion (20) connected to the introduction portion (14) and forming a swirl flow path (21), having a spiral shape, through which the exhaust gas flows;
a turbine portion (30) rotationally driven, by the exhaust gas guided from the swirl flow path (21), about a rotor shaft (310);
and
a nozzle portion (40) guiding, to the turbine portion (30), the exhaust gas flowing into the swirl flow path (21), the nozzle portion (40) being provided with a plurality of nozzle blades (41) along a circumferential direction about the rotor shaft (310), the method comprising:
a first cleaning step of feeding a solid cleanser, having a predetermined particle size, to the introduction flow path (11) along a first direction (Dr1) crossing an axial direction in which the axis (X1) extends;
a second cleaning step of feeding the solid cleanser to the introduction flow path (11) along a second direction (Dr2) crossing the axial direction in which the axis (X1) extends; and
a third cleaning step of feeding the solid cleanser to the introduction flow path (11) along a third direction (Dr3) crossing the axial direction in which the axis (X1) extends, wherein
the first direction (Dr1) is set so that the solid cleanser fed to the introduction flow path (11) is guided to the nozzle portion (40) without contacting an inner wall of the casing portion (20),
the second direction (Dr2) and the third direction (Dr3) are set so that the solid cleanser fed to the introduction flow path (11) is guided to the nozzle portion (40) after coming into contact with the inner wall of the casing portion (20), and an angle formed by the second direction (Dr2) and the axial direction is smaller than an angle formed by the third direction (Dr3) and the axial direction.

7. The method for cleaning the exhaust turbine according to claim 6, wherein the first cleaning step, the second cleaning step, and the third cleaning step are executed at independent timings.

## Patentansprüche

1. Abgasturbine (100), umfassend:
einen Einführungsabschnitt (14), der sich entlang einer Achse (X1) erstreckt und einen Einführungsströmungsweg (11) bildet, durch den von einer Brennkraftmaschine geführtes Abgas entlang der Achse strömt;
einen Gehäuseabschnitt (20), der mit dem Einführungsabschnitt (14) verbunden ist und einen Drallströmungsweg (21) bildet, der eine Spiralform aufweist, durch den das Abgas strömt;
einen Turbinenabschnitt (30), der durch das aus dem Drallströmungsweg (21) geführte Abgas um eine Rotorwelle (310) in Drehung versetzt wird; und
einen Düsenabschnitt (40), der das Abgas, das in den Drallströmungsweg (21) strömt, zu dem Turbinenabschnitt (30) führt,
wobei der Düsenabschnitt (40) mit einer Vielzahl von Düsenschaufeln (41) entlang einer Umfangsrichtung um die Rotorwelle (310) bereitgestellt ist, wobei
der Einführungsabschnitt (14) einen ersten Zuführungsabschnitt (14a) einschließt, der ausgebildet ist, um ein festes Reinigungsmittel, das einen Feststoff, der eine vorbestimmte Teilchengröße aufweist, einschließt, dem Einführungsströmungsweg (11) entlang einer ersten Richtung (Dr1) zuzuführen, die eine axiale Richtung kreuzt, in der sich die Achse (X1) erstreckt, und
die erste Richtung (Dr1) so eingestellt ist, dass das dem Einführungsströmungsweg (11) zugeführte feste Reinigungsmittel zu dem Düsenabschnitt (40) geführt wird, ohne eine Innenwand des Gehäuseabschnitts (20) zu berühren.

2. Abgasturbine nach Anspruch 1, wobei
der Einführungsabschnitt (14) einen zweiten Zuführungsabschnitt (14b) einschließt, um das feste Reinigungsmittel dem Einführungsströmungsweg (11) entlang einer zweiten Richtung (Dr2) zuzuführen, die die axiale Richtung kreuzt, in der sich die Achse (X1) erstreckt, und
die zweite Richtung (Dr2) so eingestellt ist, dass das dem Einführungsströmungsweg (11) zugeführte feste Reinigungsmittel zu dem Düsenabschnitt (40) geführt wird, nachdem es mit der Innenwand des Gehäuseabschnitts (20) in Kontakt gekommen ist.

3. Abgasturbine nach Anspruch 2, wobei
der Einführungsabschnitt (14) einen dritten Zuführungsabschnitt (14c) einschließt, um das feste Reinigungsmittel dem Einführungsströmungsweg (11) entlang einer dritten Richtung (Dr3) zuzuführen, die die axiale Richtung kreuzt, in der sich die Achse (X1) erstreckt,
die dritte Richtung (Dr3) so eingestellt ist, dass das dem Einführungsströmungsweg (11) zugeführte feste Reinigungsmittel zu dem Düsenabschnitt (40) geführt wird, nachdem es mit der Innenwand des Gehäuseabschnitts (20) in Kontakt gekommen ist, und
ein Winkel, der durch die zweite Richtung (Dr2) und die axiale Richtung gebildet wird, kleiner ist als ein Winkel, der durch die dritte Richtung (Dr3) und die axiale Richtung gebildet wird.

4. Abgasturbine nach einem der Ansprüche 1 bis 3, wobei das feste Reinigungsmittel eine Vielzahl von Arten von Feststoffen, die unterschiedliche Teilchengrößen aufweisen, einschließt.

5. Turbolader (300), umfassend:
die Abgasturbine (100) nach einem der Ansprüche 1 bis 4; und
einen Kompressor (200), der ausgebildet ist, um Druckluft zu erzeugen und die Druckluft der Brennkraftmaschine zuzuführen, wobei der Kompressor (200) über eine Rotorwelle (310) mit der Abgasturbine (100) verbunden ist und sich um die Rotorwelle (310) dreht.

6. Verfahren zum Reinigen einer Abgasturbine (100), wobei die Abgasturbine (100) Folgendes einschließt:
einen Einführungsabschnitt (14), der sich entlang einer Achse (X1) erstreckt und einen Einführungsströmungsweg (11) bildet, durch den von einer Brennkraftmaschine (400) geführtes Abgas entlang der Achse (X1) strömt;
einen Gehäuseabschnitt (20), der mit dem Einführungsabschnitt (14) verbunden ist und einen Drallströmungsweg (21) bildet, der eine Spiralform aufweist, durch den das Abgas strömt;
einen Turbinenabschnitt (30), der durch das aus dem Drallströmungsweg (21) geführte Abgas um eine Rotorwelle (310) in Drehung versetzt wird; und
einen Düsenabschnitt (40), der das in den Drallströmungsweg (21) strömende Abgas zu dem Turbinenabschnitt (30) führt, wobei der Düsenabschnitt (40) mit einer Vielzahl von Düsenschaufeln (41) entlang einer Umfangsrichtung um die Rotorwelle (310) bereitgestellt ist, wobei das Verfahren Folgendes umfasst:
einen ersten Reinigungsschritt des Zuführens eines festen Reinigungsmittels, das eine vorbestimmte Teilchengröße aufweist, zu dem Einführungsströmungsweg (11) entlang einer ersten Richtung (Dr1), die eine axiale Richtung kreuzt, in der sich die Achse (X1) erstreckt;
einen zweiten Reinigungsschritt des Zuführens des festen Reinigungsmittels zu dem Einführungsströmungsweg (11) entlang einer zweiten Richtung (Dr2), die die axiale Richtung kreuzt, in der sich die Achse (X1) erstreckt; und
einen dritten Reinigungsschritt des Zuführens des festen Reinigungsmittels zu dem Einführungsströmungsweg (11) entlang einer dritten Richtung (Dr3), die die axiale Richtung kreuzt, in der sich die Achse (X1) erstreckt,
wobei
die erste Richtung (Dr1) so eingestellt ist, dass das dem Einführungsströmungsweg (11) zugeführte feste Reinigungsmittel zu dem Düsenabschnitt (40) geführt wird, ohne eine Innenwand des Gehäuseabschnitts (20) zu berühren,
die zweite Richtung (Dr2) und die dritte Richtung (Dr3) so eingestellt sind, dass das dem Einführungsströmungsweg (11) zugeführte feste Reinigungsmittel zu dem Düsenabschnitt (40) geführt wird, nachdem es mit der Innenwand des Gehäuseabschnitts (20) in Kontakt gekommen ist, und
ein Winkel, der durch die zweite Richtung (Dr2) und die axiale Richtung gebildet wird, kleiner ist als ein Winkel, der durch die dritte Richtung (Dr3) und die axiale Richtung gebildet wird.

7. Verfahren zum Reinigen der Abgasturbine nach Anspruch 6, wobei der erste Reinigungsschritt, der zweite Reinigungsschritt und der dritte Reinigungsschritt zu unabhängigen Zeitpunkten ausgeführt werden.

## Revendications

1. Turbine d'échappement (100) comprenant :
une partie d'introduction (14) s'étendant le long d'un axe (X1) et formant un chemin d'écoulement d'introduction (11) à travers lequel un gaz d'échappement guidé à partir d'un moteur à combustion interne s'écoule le long de l'axe ;
une partie d'enveloppe (20) connectée à la partie d'introduction (14) et formant un chemin d'écoulement tourbillonnaire (21), présentant une forme de spirale, à travers lequel le gaz d'échappement s'écoule ;
une partie de turbine (30) entraînée en rotation, par le gaz d'échappement guidé à partir du chemin d'écoulement tourbillonnaire (21), autour d'un arbre de rotor (310) ; et
une partie de buse (40) guidant, vers la partie de turbine (30), le gaz d'échappement s'écoulant
dans le chemin d'écoulement tourbillonnaire (21), la partie de buse (40) étant pourvue d'une pluralité de pales de buse (41) le long d'une direction circonférentielle autour de l'arbre de rotor (310), dans laquelle
la partie d'introduction (14) comprend une première partie d'alimentation (14a) configurée pour amener un nettoyant solide comprenant une matière solide présentant une taille de particule prédéterminée, au chemin d'écoulement d'introduction (11) le long d'une première direction (Dr1) coupant une direction axiale dans laquelle l'axe (X1) s'étend, et
la première direction (Dr1) est établie de telle sorte que le nettoyant solide amené au chemin d'écoulement d'introduction (11) soit guidé vers la partie de buse (40) sans entrer en contact avec une paroi intérieure de la partie d'enveloppe (20).

2. Turbine d'échappement selon la revendication 1, dans laquelle
la partie d'introduction (14) comprend une deuxième partie d'alimentation (14b) de manière à amener le nettoyant solide au chemin d'écoulement d'introduction (11) le long d'une deuxième direction (Dr2) coupant la direction axiale dans laquelle l'axe (X1) s'étend, et
la deuxième direction (Dr2) est établie de telle sorte que le nettoyant solide amené au chemin d'écoulement d'introduction (11) soit guidé vers la partie de buse (40) après être entré en contact avec la paroi intérieure de la partie d'enveloppe (20).

3. Turbine d'échappement selon la revendication 2, dans laquelle
la partie d'introduction (14) comprend une troisième partie d'alimentation (14c) de manière à amener le nettoyant solide au chemin d'écoulement d'introduction (11) le long d'une troisième direction (Dr3) coupant la direction axiale dans laquelle l'axe (X1) s'étend,
la troisième direction (Dr3) est établie de telle sorte que le nettoyant solide amené au chemin d'écoulement d'introduction (11) soit guidé vers la partie de buse (40) après être entré en contact avec la paroi intérieure de la partie d'enveloppe (20), et
un angle formé par la deuxième direction (Dr2) et la direction axiale est plus petit qu'un angle formé par la troisième direction (Dr3) et la direction axiale,

4. Turbine d'échappement selon l'une quelconque des revendications 1 à 3, dans laquelle le nettoyant solide comprend une pluralité de types de matières solides présentant des tailles de particule différentes.

5. Turbocompresseur (300) comprenant :
la turbine d'échappement (100) selon l'une quelconque des revendications 1 à 4 ; et
un compresseur (200) configuré pour générer de l'air comprimé et fournir de l'air comprimé au moteur à combustion interne, le compresseur (200) étant connecté à la turbine d'échappement (100) par l'intermédiaire d'un arbre de rotor (310) et tournant autour de l'arbre de rotor (310).

6. Procédé de nettoyage d'une turbine d'échappement (100), la turbine d'échappement (100) comprenant :
une partie d'introduction (14) s'étendant le long d'un axe (X1) et formant un chemin d'écoulement d'introduction (11) à travers lequel un gaz d'échappement guidé à partir d'un moteur à combustion interne (400) s'écoule le long de l'axe (X1) ;
une partie d'enveloppe (20) connectée à la partie d'introduction (14) et formant un chemin d'écoulement tourbillonnaire (21), présentant une forme de spirale, à travers lequel le gaz d'échappement s'écoule ;
une partie de turbine (30) entraînée en rotation, par le gaz d'échappement guidé à partir du chemin d'écoulement tourbillonnaire (21), autour d'un arbre de rotor (310) ; et
une partie de buse (40) guidant, vers la partie de turbine (30), le gaz d'échappement s'écoulant dans le chemin d'écoulement tourbillonnaire (21), la partie de buse (40) étant pourvue d'une pluralité de pales de buse (41) le long d'une direction circonférentielle autour de l'arbre de rotor (310), le procédé comprenant :
une première étape de nettoyage consistant à amener un nettoyant solide, présentant une taille de particule prédéterminée, au chemin d'écoulement d'introduction (11) le long d'une première direction (Dr1) coupant une direction axiale dans laquelle l'axe (X1) s'étend ;
une deuxième étape de nettoyage consistant à amener le nettoyant solide au chemin d'écoulement d'introduction (11) le long d'une deuxième direction (Dr2) coupant la direction axiale dans laquelle l'axe (X1) s'étend ; et
une troisième étape de nettoyage consistant à amener le nettoyant solide au chemin d'écoulement d'introduction (11) le long d'une troisième direction (Dr3) coupant la direction axiale dans laquelle l'axe (X1) s'étend,
dans lequel
la première direction (Dr1) est établie de telle sorte que le nettoyant solide amené au chemin d'écoulement d'introduction (11) soit guidé vers la partie de buse (40) sans entrer en contact avec une paroi intérieure de la partie d'enveloppe (20),
la deuxième direction (Dr2) et la troisième direction (Dr3) sont établies de telle sorte que le nettoyant solide amené au chemin d'écoulement d'introduction (11) soit guidé vers la partie de buse (40) après être entré en contact avec la paroi intérieure de la partie d'enveloppe (20), et
un angle formé par la deuxième direction (Dr2) et la direction axiale est plus petit qu'un angle formé par la troisième direction (Dr3) et la direction axiale.

7. Procédé de nettoyage de la turbine d'échappement selon la revendication 6, dans lequel la première étape de nettoyage, la deuxième étape de nettoyage et la troisième étape de nettoyage sont exécutées à des moments indépendants.
